(19) **Europäisches Patentamt**
**European Patent Office**
**Office européen des brevets**

(11) **EP 2 722 598 B1**

(12) **EUROPEAN PATENT SPECIFICATION**

(45) Date of publication and mention
of the grant of the patent:
**12.08.2015 Bulletin 2015/33**

(51) Int Cl.:
*F24D 19/00* *(2006.01)*      *C02F 5/02* *(2006.01)*

(21) Application number: **13188779.6**

(22) Date of filing: **15.10.2013**

(54) **Water heater**

Warmwasserbereiter

Chauffe-eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2012 JP 2012228614**

(43) Date of publication of application:
**23.04.2014 Bulletin 2014/17**

(73) Proprietor: **Panasonic Corporation
Kadoma-shi
Osaka 571-8501 (JP)**

(72) Inventors:
• **Yamada, Muneto
OSAKA, 540-6207 (JP)**

• **Sano, Mitsuhiro
OSAKA, 540-6207 (JP)**
• **Ohama, Masahiro
OSAKA, 540-6207 (JP)**
• **Nishiyama, Yoshitsugu
OSAKA, 540-6207 (JP)**
• **Yanagisawa, Tadashi
OSAKA, 540-6207 (JP)**

(74) Representative: **Eisenführ Speiser
Patentanwälte Rechtsanwälte PartGmbB
Postfach 31 02 60
80102 München (DE)**

(56) References cited:
**WO-A1-2012/144277      JP-A- 2011 069 572**

## Description

[TECHNICAL FIELD]

The present invention relates to a water heater including scale suppressing means.

[BACKGROUND TECHNIQUE]

As a water heater of this kind, there is a conventional water heater which supplies hot water using high temperature hot water stored in a hot water tank (see patent document 1 for example).

Fig. 13 shows the conventional water heater described in patent document 1. As shown in Fig. 13, this water heater includes a heat pump unit 2 including a gas cooler (hot water-supply heat exchanger) 1, and a hot water storing unit 4 including a hot water tank 3 in which hot water boiled by the gas cooler 1 is stored.

In the heat pump unit 2, a compressor 5, the gas cooler 1, an expansion valve (decompressor) 6 and an evaporator 7 are connected to one another to configure a refrigerant circulation passage. In the hot water storing unit 4, a circulation pump 8 the gas cooler 1 and the hot water tank 3 are connected to one another to configure a water circuit.

A high temperature and high pressure gas refrigerant compressed by the compressor 5 heat-exchanges with water stored in the hot water tank 3 in the gas cooler 1, thereby heating water. A water circulation passage extending from the hot water tank 3 to the gas cooler 1 includes an adding device (scale suppressing means) 9 which supplies suppressing agent. The suppressing agent suppresses generation of scale. The adding device 9 adds additive agent to low temperature water before the water flows into the gas cooler 1. By adding the additive agent to water, generation of scale in the water circuit of the hot water storing unit 4 is suppressed, and this prevents the water circuit from being clogged.

Patent document 1 includes a bypass circuit (not shown) which bypasses the adding device 9. A three-way valve (not shown) is provided at a branch point of the bypass circuit. By switching the three-way valve, water selectively flows to the adding device 9 or the bypass circuit.

[PRIOR ART DOCUMENT]

[PATENT DOCUMENT]

[Patent Document 1] Japanese Patent Application Laid-open No.2011-69572

[SUMMARY OF THE INVENTION]

[PROBLEM TO BE SOLVED BY THE INVENTION]

According to the conventional configuration, however, since the additive amount of scale suppressing agent can not be adjusted in accordance with variation in operating conditions of the water heater, there is a problem that it is not possible to effectively prevent scale from generating. Further, the scale suppressing agent is consumed more than necessary, and there is a problem that this consumption increases costs required for exchanging the scale suppressing agent and for maintenance.

The present invention has been accomplished to solve these problems, and it is an object of the invention to provide a water heater capable of suppressing scale from being deposited without wasting scale suppressing agent by appropriately adjusting an additive amount of the scale suppressing agent in accordance with variation in operating conditions of the water heater.

[MEANS FOR SOLVING THE PROBLEM]

To solve the problems of the conventional technique, the present invention provides a water heater comprising: a hot water tank in which hot water is stored; heating means for heating water sent from a lower portion of the hot water tank through an entering-water pipe passage; a circulation pump which is disposed in the entering-water pipe passage and which sends water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when a temperature of water heated by the heating means is higher, a concentration of the scale suppressing agent included in water which flows into the heating means is made greater.

According to this configuration, it is possible to adjust a concentration of the scale suppressing agent with respect to water which flows to the heating means in accordance with operating conditions under which scale is prone to generate. Therefore, it is possible to provide a reliable water heater capable of preventing the scale suppressing agent from being wasted, capable of reducing maintenance costs required for maintenance such as exchange and replenishment of the scale suppressing agent, and capable of effectively suppressing scale from being deposited.

[EFFECT OF THE INVENTION]

According to the present invention, it is possible to provide a water heater capable of suppressing scale from generating while adjusting a concentration of the scale suppressing agent in accordance with operating conditions of the hot water and while preventing the scale suppressing agent from being wasted.

[BRIEF DESCRIPTION OF THE DRAWINGS]

Fig. 1 is a block diagram of a water heater in a first embodiment of the present invention;
Fig. 2 is an explanatory diagram for explaining a relation between a water temperature and solubility of a scale component;
Fig. 3 is an explanatory diagram for explaining a relation between a heating temperature of water of the water heater and a heating flow rate in the first embodiment of the invention;
Fig. 4 is a characteristic diagram showing a relation between a heating temperature of water of the water heater and a concentration of scale suppressing agent;
Fig. 5 is a characteristic diagram showing another relation between the heating temperature of water of the water heater and the concentration of the scale suppressing agent;
Fig. 6 is a block diagram of a water heater in a second embodiment of the invention;
Fig. 7 is a characteristic diagram showing operating conditions suitable for an outside air temperature of the water heater;
Fig. 8 is a block diagram of a water heater in a third embodiment of the invention;
Fig. 9(a) is an explanatory diagram for explaining a relation between a flow rate and a concentration of scale suppressing agent when the flow rate is small in the hot water, and Fig. 9(b) is an explanatory diagram for explaining a relation between a flow rate and a concentration of the scale suppressing agent when the flow rate is large in the hot water;
Fig. 10(a) is a block diagram showing one example of flow rate-adjusting means which sets a split flow ratio of the water heater, and Fig. 10(b) is a block diagram showing another example of the flow rate-adjusting means which sets a split flow ratio of the water heater;
Fig. 11 is a block diagram of a water heater in a fourth embodiment of the invention;
Fig. 12 is a block diagram of a water heater in a fifth embodiment of the invention; and

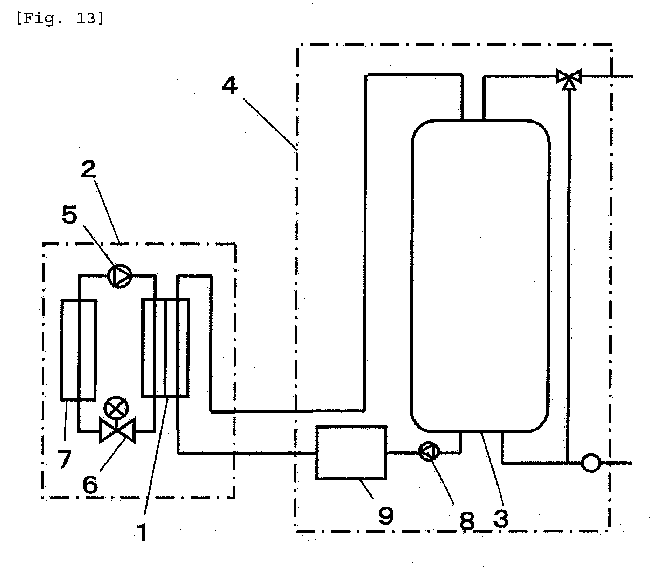

Fig. 13 is a block diagram of a conventional hot water.

[EXPLANATION OF SYMBOLS]

50    water heater
52    hot water-supply heat exchanger
55    heating means
57    hot water tank
63    circulation pump
64    entering-water pipe passage
65    outgoing-hot water pipe passage
66    temperature detecting means
67    scale suppressing agent
68    scale suppressing means
69    flow rate-adjusting means

[MODE FOR CARRYING OUT THE INVENTION]

A first aspect of the invention provides a water heater comprising: a hot water tank in which hot water is stored; heating means for heating water sent from a lower portion of the hot water tank through an entering-water pipe passage; a circulation pump which is disposed in the entering-water pipe passage and which sends water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when a temperature of water heated by the heating means is higher, a concentration of the scale suppressing agent included in water which flows into the heating means is made greater.

According to this aspect, when an outlet temperature (heating temperature) of the heating means is high (this is an operating condition under which scale is prone to generate), since a concentration of the scale suppressing agent included in water which flows to the heating means is increased, it is possible to efficiently suppress the scale from generating. Hence, it is possible to prevent a pipe circuit through which water flows from being clogged, and the water heater can stably operate.

Since the concentration of the scale suppressing agent is appropriately adjusted in accordance with the heating temperature, it is possible to prevent the scale suppressing agent from being wasted and to reduce maintenance costs required for maintenance such as exchange and replenishment of the scale suppressing agent.

According to a second aspect of the invention, especially in the first aspect, when the temperature of the water heated by the heating means is higher, a flow rate of water which flows into the heating means is made smaller.

According to this aspect, if the flow rate is reduced, residence time of water in the heating means is increased. Therefore, the heating temperature can be made high, and if the flow rate is increased, the heating temperature can be lowered. If the flow rate is reduced, the residence time of water in the scale suppressing means is shortened. Therefore, the concentration of the scale suppressing agent can be increased. If the flow rate is increased, it is possible to lower the concentration of the scale suppressing agent included in water which flows into the heating means.

That is, if the flow rate is reduced, the concentration of the scale suppressing agent can be increased and the heating temperature can be made high. If the flow rate is increased, the concentration of the scale suppressing agent can be lowered and the heating temperature can be lowered. Therefore, by adjusting the flow rate, it is possible to adjust, at the same time, the heating temperature and the concentration of the scale suppressing agent suitably for the heating temperature.

According to a third aspect of the invention, especially in the first aspect, the entering-water pipe passage is provided with a bypass circuit which bypasses a portion of the entering-water pipe passage, the scale suppressing means includes flow rate-adjusting means which is disposed in the bypass circuit and which adjusts a ratio between a flow rate of water flowing through the entering-water pipe passage and a flow rate of water flowing through the bypass circuit, the scale suppressing means also includes temperature detecting means which measures the temperature of water heated by the heating means, and the ratio of the flow rates is adjusted based on a detected value of the temperature detecting means.

According to this aspect, it is possible to branch a portion of water flowing through the entering-water pipe passage in accordance with a detected value of the temperature detecting means and to guide the branched water into the scale suppressing means, the scale suppressing agent is made to dissolve in the water, and other water can be made to flow into the hot water-supply heat exchanger as it is. Hence, in accordance with operating conditions, it is possible to appropriately adjust the concentration of the scale suppressing agent with respect to water which flows into the heating means.

That is, when the heating flow rate is small (this is an operating condition under which scale is prone to generate), it is possible to increase the concentration of the scale suppressing agent which dissolves in water flowing into the heating means. Hence, it is possible to prevent the hot water-supply heat exchanger from being clogged with scale, and to realize a reliable water heater.

Further, since a waste of the scale suppressing agent can be reduced, lifetime of the scale suppressing agent is increased. Hence, it is possible to reduce maintenance costs required for maintenance such as exchange and replenishment of the scale suppressing agent.

According to a fourth aspect of the invention, especially in any one of the first to third aspects, the scale suppressing agent has polyphosphate as a main component.

According to this aspect, polyphosphate which dissolved in water is applied to calcium carbonate which is a main component of scale and crystal of calcium carbonate is improved. That is, the calcium carbonate can be formed into small spherical crystals instead of normal large rhombohedral bodies. The spherical crystals have a weak cohesive force unlike the rhombohedral crystals, it is difficult to laminate the spherical crystals, they become massed together in a point-to-point manner, and it is possible to hinder the growth of crystals. Hence, it is possible to restrain calcium carbonate from becoming scale.

Embodiments of the present invention will be described with reference to the drawings. The invention is not limited by the embodiments.

(First Embodiment)

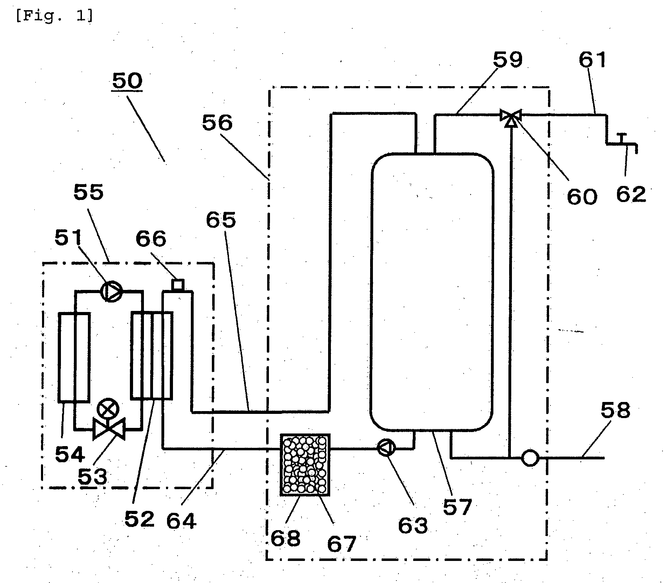

Fig. 1 is a block diagram of a water heater in a first embodiment of the present invention.

As shown in Fig. 1, the water heater 50 includes heating means 55 and a hot water storing unit 56. The heating means 55 which is a heat source is a heat pump unit composed of a heat pump cycle. The heat pump cycle includes a compressor 51, a hot water-supply heat exchanger 52, a decompressor 53, and an evaporator 54 which absorbs atmospheric heat. As a refrigerant, the heat pump cycle uses carbon dioxide whose high pressure side refrigerant pressure becomes equal to or higher than a critical pressure.

A hot water tank 57 is accommodated in the hot water storing unit 56. Water is supplied to the hot water tank 57 from a water supply pipe 58 connected to a lower portion of the hot water tank 57. High temperature hot water is stored in an upper portion of the hot water tank 57. The high temperature hot water passes through a hot water-supply pipe passage 59, and the hot water is mixed with low temperature water by a hot water-mixing valve 60 and becomes hot water of a desired temperature. Thereafter, the hot water passes through the hot water-supply pipe 61 and is supplied from a hot water terminal (faucet 62).

A entering-water pipe passage 64 is connected to a lower portion of the hot water tank 57. The entering-water pipe passage 64 is provided with a circulation pump 63. The entering-water pipe passage 64 is connected to the hot water-supply heat exchanger 52. An outgoing-hot water pipe passage 65 is connected to the hot water-supply heat exchanger 52. The outgoing-hot water pipe passage 65 is connected to the upper portion of the hot water tank 57. The circulation pump 63, the entering-water pipe passage 64, the hot water-supply heat exchanger 52 and the outgoirig-hot water pipe passage 65 configure a boiling circuit. Low temperature water sent out from the lower portion of the hot water tank 57 by the circulation pump 63 is heated by a high temperature refrigerant in the hot water-supply heat exchanger 52, and this water is stored in the upper portion of the hot water tank 57 through the outgoing-hot water pipe passage 65. A temperature of the hot water heated by the hot water-supply heat exchanger 52 is detected by temperature detecting means 66 disposed in the outgoing-hot water pipe passage 65.

The entering-water pipe passage 64 is provided with scale suppressing means 68 into which scale suppressing agent 67 is charged.

An operation and an effect of the water heater 50 configured as described above will be described below.

A hot water supply and heating operation for boiling water in the hot water tank 57 will be described in Fig. 1. If it is requested (not shown) to boil the hot water tank 57, the hot water supply and heating operation utilizing atmospheric heat is carried out by the heating means 55.

In this case, a high temperature and high pressure refrigerant higher than a critical pressure discharged from the compressor 51 flows into the hot water-supply heat exchanger 52, and dissipates heat to low temperature water sent from the lower portion of the hot water tank 57. Thereafter, the refrigerant is decompressed by the decompressor 53, absorbs heat from atmosphere in the evaporator 54 and is gasified and returns to the compressor 51.

A flow rate of water which flows into the hot water-supply heat exchanger 52 through the entering-water pipe passage 64 is adjusted by controlling the number of rotations of the circulation pump 63 such that an outlet temperature (heating temperature) of the hot water-supply heat exchanger 52 becomes equal to a desired temperature. According to this, hot water of a desired temperature flows from the upper portion of the hot water tank 57 and is stored.

Since the entering-water pipe passage 64 is provided with the scale suppressing means 68 into which the scale suppressing agent 67 is charged, water sent from the lower portion of the hot water tank 57 by the circulation pump 63 flows into the scale suppressing means 68 and dissolves the scale suppressing agent 67. Water in which the scale suppressing agent 67 is dissolved flows into the hot water-supply heat exchanger 52, and is heated until its temperature becomes equal to a desired temperature as described above.

Here, the scale suppressing agent 67 is particles having polyphosphate as a main component and is charged into the scale suppressing means 68. The scale suppressing agent 67 dissolved in water suppresses growth of crystal of calcium carbonate generated in the hot water-supply heat exchanger 52, and prevents scale from generating.

Typical examples of polyphosphate are sodium tripolyphosphate and sodium hexametaphosphate, but other polyphosphate may also be used.

In this embodiment, the scale suppressing agent 67 is particles having polyphosphate as a main component, but the scale suppressing agent 67 may have low molecular polymer as a main component such as phosphonic acid-based or carboxylic acid-based high molecular electrolyte, and it is only necessary that the scale suppressing agent 67 has a scale suppressing function.

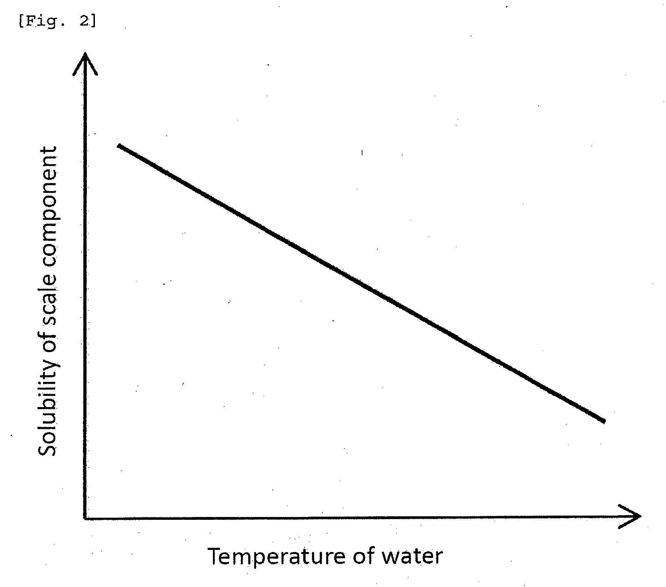

Next, a relation between deposition of scale and a temperature of water will be described. In Fig. 2, a horizontal axis shows a temperature of water, a vertical axis shows solubility of a scale component, and Fig. 2 shows solubility of the scale component with respect to water.

As shown in Fig. 2, the higher a temperature of water becomes, the smaller the solubility of the scale component (e.g., calcium carbonate) becomes, and the scale component crystallizes and is deposited in water.

In the case of a hot water-storing type water heater, hot water of an amount corresponding to a hot water supply load of one day is stored in the hot water tank 57 utilizing midnight power service which is inexpensive in electricity cost. Here, the hot water supply load is large in winter season when an outside air temperature is low, and is small in summer season when the outside air temperature is high.

With respect to the hot water supply load which changes depending upon reason, the heating temperature of hot water to be stored in the hot water tank 57 is changed (e.g., from 65°C to 90°C). That is, in winter season when the hot water supply load is large, hot water is stored at a heating temperature of 85°C to 90°C for example, and in summer season when the hot water supply load is small, hot water is stored at a heating temperature of 65°C to 70°C which is lower than winter. In intermediate seasons such as spring and fall, an intermediate heating temperature which is lower than winter and higher than summer is employed.

Hence, scale which adheres to and is deposited on a surface of a water passage in the hot water-supply heat exchanger 52 is more generated when the heating temperature is high such as a boiling operation in winter.

Hence, if a concentration of the scale suppressing agent 67 which is dissolved in water is increased under an operating condition under which scale is prone to be deposited, i.e., when the heating temperature is high, it is possible to effectively suppress the deposition of scale.

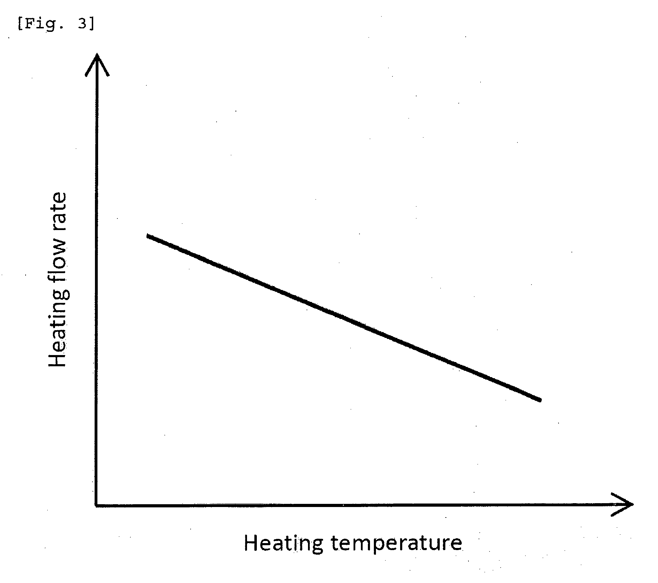

Here, in the case of the hot water-storing type water heater, generally, the heating ability is substantially constant even when the outside air temperature is changed. Generally, the lower the outside air temperature is, the lower a temperature of tap water supplied to the hot water is. In Fig. 3, a horizontal axis shows a heating temperature, a vertical axis shows a heating flow rate, i.e., a flow rate of water which flows into the heating means 55 and is heated, and Fig. 3 shows a relation between the heating temperature and the heating flow rate.

If the heating ability of the heating means 55 is substantially constant, it is possible to adjust a heating temperature of water supplied from a tap by adjusting a flow rate (heating flow rate) of water which flows into the heating means 55, as shown in Fig. 3. For example, if the heating flow rate is reduced, a residence time of water in the heating means 55 is increased. As compared with a case where the heating flow rate is higher, a heat quantity obtained by water per unit flow rate from a high temperature refrigerant is increased. Hence, it is possible to increase the heating temperature.

Therefore, as shown in Fig. 3, the number of rotations of the circulation pump 63 is controlled such that if a heating temperature is higher when hot water is produced, a flow rate of water which flows into the heating means 55 becomes smaller. That is, the number of rotations of the circulation pump 63 is reduced. By changing the number of rotations of the circulation pump 63, various heating temperatures can be accepted.

If the heating flow rate is reduced, i.e., if the flow rate of water which flows into the heating means 55 is reduced, time during which water flowing through the entering-water pipe passage 64 stays in the scale suppressing means 68 is increased as compared with a case where the heating flow rate is high. That is, time during which water and the scale suppressing agent 67 are in contact with each other is increased. Hence, since an amount of scale suppressing agent 67 dissolved in water can be increased, a concentration of scale suppressing agent 67 included in water which flows into the heating means 55 can be increased.

In a situation where scale is prone to be deposited, i.e., under an operating condition having high heating temperature, the number of rotations of the circulation pump 63 is controlled such that a flow rate of water which flows into the heating means 55 is reduced. According to this, it is possible to increase the heating temperature, and it is possible to increase an amount of the scale suppressing agent 67 dissolved in water per unit flow rate, i.e., it is possible to increase a concentration of the scale suppressing agent 67 by the scale suppressing means 68.

Hence, since it is possible to adjust the concentration of the scale suppressing agent which is dissolved in water in accordance with operating conditions of the water heater, it is possible to provide a reliable water heater without wasting the scale suppressing agent.

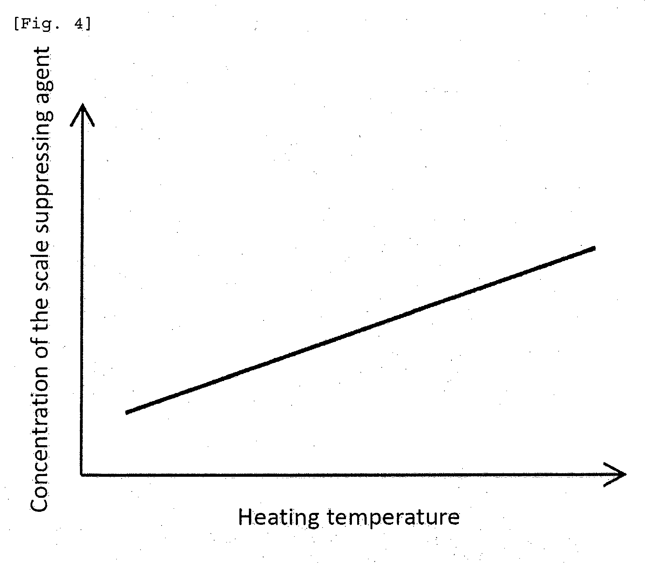

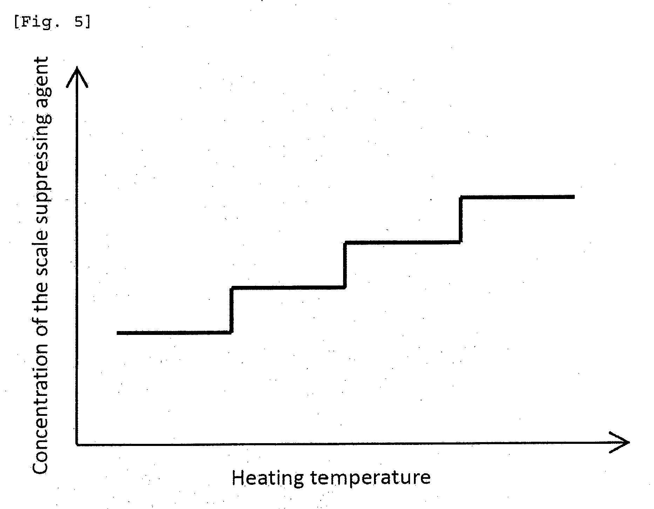

Figs. 4 and 5 show a relation between a heating temperature and a concentration of the scale suppressing agent dissolved in water which flows into the heating means 55. As shown in Fig. 4, it is possible to employ a configuration that the higher the heating temperature is, the higher the concentration of the scale suppressing agent becomes. Alternatively, the concentration of the scale suppressing agent may be increased in a stepwise manner as shown in Fig. 5. If the concentration of the scale suppressing agent 67 dissolved in water which flows into the heating means 55 can be increased when the heating temperature is higher, the configuration is not limited to those shown in Figs. 4 and 5.

As described above, when the heating temperature is high where scale is prone to generate, the concentration of the scale suppressing agent 67 included in water which flows into the heating means 55 is increased. Therefore, it is possible to stably suppress the generation of scale without depending upon the heating temperature. Hence, it is possible to prevent a water circuit such as the hot water-supply heat exchanger 52 from being clogged, and to stably operate the water heater 50.

Since the concentration of the scale suppressing agent 67 is appropriately adjusted in accordance with the heating temperature, it is possible to effectively consume the scale suppressing agent 67 in just proportion. Hence, it is possible to reduce maintenance costs required for maintenance such as exchange and replenishment of the scale suppressing agent 67.

The scale suppressing agent 67 is particles including polyphosphate as a main component. According to this, polyphosphate which dissolved in water is applied to calcium carbonate which is a main component of scale and crystal of calcium carbonate is improved. That is, the calcium carbonate is formed into small spherical crystals instead of normal large rhombohedral bodies. Therefore, a cohesive force of the crystals becomes weak and thus, it is possible to hinder the growth of the crystals. Hence, it is possible to restrain calcium carbonate from becoming scale.

The heating means 55 is composed of the heat pump cycle which includes the compressor 51, the hot water-supply heat exchanger 52, the decompressor 53 and the evaporator 54. Heat exchange is carried out between water and a high temperature refrigerant compressed in the hot water-supply heat exchanger 52, thereby boiling the water. The refrigerant circulates in the heat pump cycle, heat radiation and heat absorption are repeated, and efficient water boiling is realized. Energy of the water heater 50 can be saved.

(Second Embodiment)

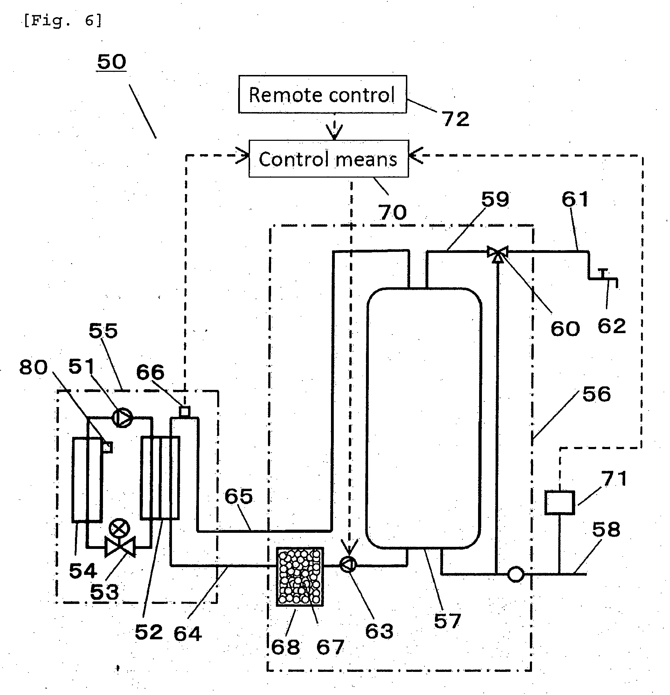

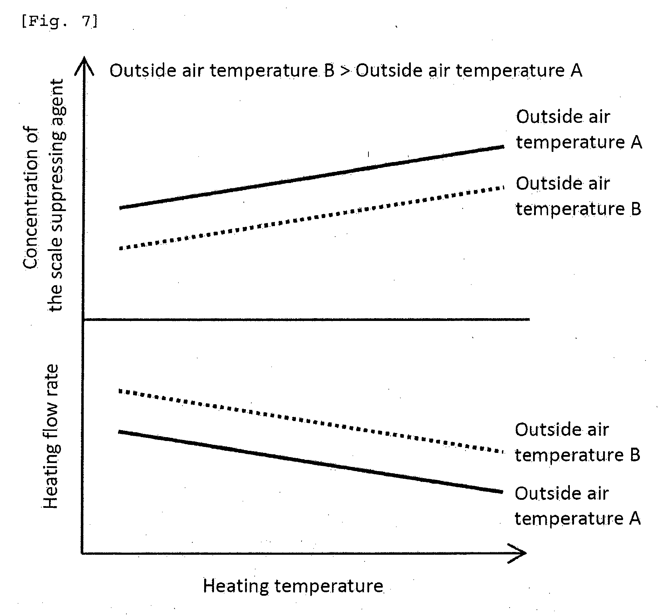

Fig. 6 is a block diagram of a water heater in a second embodiment of the invention, and Fig. 7 is a characteristic diagram with respect to a heating temperature in the second embodiment.

In the second embodiment, the same symbols are allocated to the same elements as those in the first embodiment, and detailed description thereof will be omitted.

As shown in Fig. 6, the circulation pump 63 is disposed in the entering-water pipe passage 64 of the water heater 50. The circulation pump 63 adjusts an amount of water which flows from the hot water tank 57 to the hot water-supply heat exchanger 52. The heat pump unit forming the heating means 55 is provided with outside air temperature-measuring means 80 which measures outside air temperature.

The outside air temperature-measuring means 80 is disposed in the evaporator 54 which configures the heat pump unit, and the outside air temperature-measuring means 80 is disposed on the most windward with respect to current of air which flows into the evaporator 54. According to this, the outside air temperature-measuring means 80 can detects a temperature of air which flows into the evaporator 54.

An operation and an effect of the water heater 50 configured as described above will be described below.

An operation of the circulation pump 63 is appropriately adjusted by a command from control means 70 which receives a signal of the temperature detecting means 66. As shown in Fig. 7, a flow rate is changed in accordance with a heating temperature. By changing the flow rate, residence time of water in the scale suppressing means 68 is changed. Therefore, an amount of scale suppressing agent 67 which dissolves in water is also changed. That is, it is possible to adjust a concentration of the scale suppressing agent 67 which dissolves in water flowing flows into the heating means 55 by the circulation pump 63.

In this embodiment, as shown in Fig. 7, when the heating temperature is high, a heating flow rate is reduced by the circulation pump 63, and the concentration of the scale suppressing agent 67 is increased.

Here, a temperature of city water (entering water) supplied through the water supply pipe 58 is changed by an outside air temperature when the water heater 50 is installed. That is, when the outside air temperature is high, a temperature of city water (entering water) also becomes high, and when the outside air temperature is low, the temperature of city water (entering water) also becomes low. When the outside air temperature is low, an amount of hot water to be used is high, and a temperature of hot water to be used is high. Hence, it is necessary that the heating temperature is increased and a great amount of high temperature hot water is stored in the hot water tank 57.

A target value of the heating temperature is changed depending upon a degree of the outside air temperature. For example, when the outside air temperature is low (outside air temperature A), the heating temperature is increased as compared with a case where the outside air temperature is high (outside air temperature B). At this time, a heat radiation amount from a high temperature refrigerant into water per unit flow rate is increased by the heating means 55. Hence, the number of rotations of the circulation pump 63 is controlled such that a heating flow rate is reduced as compared with a case where the outside air temperature is B, as shown in Fig. 7.

When the outside air temperature measured by the outside air temperature-measuring means 80 is high, the heating temperature is lowered, and a heating quantity of the heating means 55 can be reduced. As shown in Fig. 7, to shorten residence time of water in the hot water-supply heat exchanger 52, the number of rotations of the circulation pump 63 is increased and a flow rate of water sent to the heating means 55 under pressure is increased.

By adjusting the heating flow rate by the circulation pump 63 in accordance with the outside air temperature, it is possible to adjust a degree of the heating temperature.

It is possible to employ a configuration that a user directly inputs a heating temperature into a remote control 72 of the water heater 50 having the control means 70.

As shown in Fig. 7, it is possible to adjust a concentration of the scale suppressing agent 67 included in water which flows into the heating means 55 by adjusting the heating flow rate in accordance with the outside air temperature.

That is, when the outside air temperature is high (outside air temperature B), a flow rate of water is increased by increasing the number of rotations of the circulation pump 63 as compared with a case where the outside air temperature is low (outside air temperature A). Hence, residence time of water in the scale suppressing means 68 is reduced, and it is possible to reduce a concentration of the scale suppressing agent 67.

On the other hand, when the outside air temperature is low (outside air temperature A), a flow rate of water is reduced by reducing the number of rotations of the circulation pump 63 as compared with a case where the outside air temperature is high (outside air temperature B). Hence, residence time of water in the scale suppressing means 68 is increased, and it is possible to increase the concentration of the scale suppressing agent 67.

The concentration of the scale suppressing agent 67 dissolved in water which flows into the heating means 55 may be determined based on a detected value of hardness detecting means 71. When very hard water such as well water is supplied, the hardness detecting means 71 is disposed in the water supply pipe 58 and the hardness detecting means 71 detects hardness of water to be supplied. If hardness of water to be supplied is high, in order to control the concentration to such a level that generation of scale can be suppressed, the control means 70 adjusts the number of rotations of the circulation pump 63.

A main factor that scale adheres and generates in the hot water-supply heat exchanger 52 is hardness of water to be supplied and a temperature of hot water (heating temperature) stored in the hot water tank 57. Therefore, when the hardness of water to be supplied is high, and when the heating temperature is high, scale is prone to generate. Hence, a relation between hardness of water to be supplied, the heating temperature, and a concentration of the scale suppressing agent 67 capable of suppressing generation of scale may be memorized in the remote control 72.

According to the water heater 50 of the second embodiment, the entering-water pipe passage 64 is provided with the circulation pump 63, a flow rate of water is adjusted by the circulation pump 63 in accordance with a degree of an outside air temperature, and a concentration of the scale suppressing agent 67 dissolved in water which flows into the heating means 55 is changed.

According to this, the heating flow rate is increased, residence time of water in the scale suppressing means 68 is shortened and thus, it is possible to reduce a concentration of the scale suppressing agent 67. If a heating flow rate is reduced, it is possible to increase the concentration of the scale suppressing agent 67.

By increasing the heating flow rate, residence time of water in the hot water-supply heat exchanger 52 is shortened. Therefore, it is possible to lower the heating temperature.

That is, if the heating flow rate is increased, it is possible to reduce a concentration of the scale suppressing agent 67 and to lower the heating temperature. On the other hand, if the heating flow rate is reduced, it is possible to increase the concentration of the scale suppressing agent 67 and to rise the heating temperature. Hence, by adjusting the number of rotations of the circulation pump 63, it is possible to adjust the heating flow rate, and to appropriately adjust a concentration of the scale suppressing agent 67.

Hence, it is possible to provide a reliable water heater capable of suppressing generation of scale in accordance with operating conditions of the water heater, and capable of preventing scale suppressing agent 67 from being wasted.

(Third Embodiment)

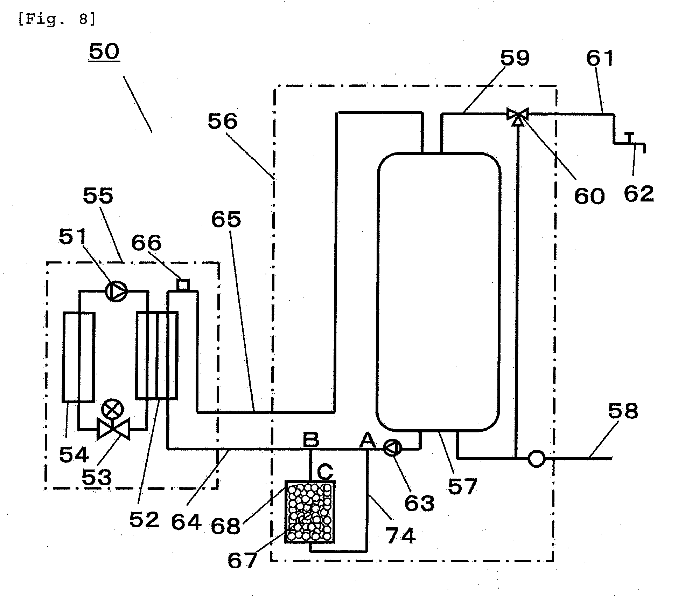

Fig. 8 is a block diagram of a water heater in a third embodiment of the invention. In the third embodiment, the same symbols are allocated to the same elements as those in the other embodiments, and detailed description thereof will be omitted.

In Fig. 8, the heating means 55 which is a heat source is a heat pump unit composed of a heat pump cycle including the compressor 51, the hot water-supply heat exchanger 52, the decompressor 53 and the evaporator 54 which absorbs atmospheric heat. As a refrigerant, the heat pump cycle uses carbon dioxide whose high pressure side refrigerant pressure becomes equal to or higher than a critical pressure.

Water is supplied to the hot water tank 57 from the water supply pipe 58 connected to a lower portion of the hot water tank 57. High temperature hot water is stored in an upper portion of the hot water tank 57. The high temperature hot water passes through the hot water-supply pipe passage 59, the hot water is mixed with low temperature water by the hot water-mixing valve 60 and becomes hot water of a desired temperature. Thereafter, the hot water passes through the hot water-supply pipe 61 and is supplied from a hot water terminal such as the faucet 62.

The entering-water pipe passage 64 is connected to a lower portion of the hot water tank 57. The entering-water pipe passage 64 is provided with the circulation pump 63. The entering-water pipe passage 64 is connected to the hot water-supply heat exchanger 52. The outgoing-hot water pipe passage 65 is connected to the hot water-supply heat exchanger 52. The outgoing-hot water pipe passage 65 is connected to the upper portion of the hot water tank 57. The circulation pump 63, the entering-water pipe passage 64, the hot water-supply heat exchanger 52 and the outgoing-hot water pipe passage 65 configure a boiling circuit. Low temperature water sent out from the lower portion of the hot water tank 57 by the circulation pump 63 disposed in the entering-water pipe passage 64 is heated by a high temperature refrigerant in the hot water-supply heat exchanger 52, and this water is stored in the upper portion of the hot water tank 57 through the outgoing-hot water pipe passage 65.

The outgoing-hot water pipe passage 65 is connected to a water-side outlet of the hot water-supply heat exchanger 52. The outgoing-hot water pipe passage 65 is provided with temperature detecting means 66 which detects a temperature of hot water heated by the heating means, i.e., a heating temperature.

Further, in the entering-water pipe passage 64, a bypass circuit 74 as another entering-water pipe passage which bypasses a portion of the entering-water pipe passage 64 is provided in parallel. The bypass circuit 74 is provided with scale suppressing means 68 into which scale suppressing agent 67 is charged. According to this, the entering-water pipe passage 64 which is not provided with the scale suppressing means 68 forms a main circuit. The bypass circuit 74 in which the scale suppressing means 68 is disposed forms a sub-circuit of the entering-water pipe passage 64.

An operation and an effect of the water heater 50 configured as described above will be described below.

In Fig. 8, a hot water supply and heating operation for boiling the hot water tank 57 will be described. If it is requested to boil the hot water tank 57, the hot water supply and heating operation utilizing the atmospheric heat is carried out by the heating means 55.

In this case, a high temperature and high pressure refrigerant which is higher than a critical pressure and which is discharged from the compressor 51 flows into the hot water-supply heat exchanger 52 and dissipates heat to low temperature water sent from the lower portion of the hot water tank 57. Thereafter, the refrigerant is decompressed by the decompressor 53, absorbs heat from atmosphere in the evaporator 54, and the refrigerant is gasified and returns into the compressor 51.

A flow rate of water which flows into the hot water-supply heat exchanger 52 is adjusted by controlling the number of rotations of the circulation pump 63 such that an outlet temperature (heating temperature) of the hot water-supply heat exchanger 52 detected by the temperature detecting means 66 becomes equal to a predetermined temperature. According to this, water which is sent from the lower portion of the hot water tank 57 through the entering-water pipe passage 64 is heated in the hot water-supply heat exchanger 52 and becomes hot water of a predetermined temperature, and flows from the upper portion of the hot water tank 57 and is stored.

The bypass circuit 74 provided with the scale suppressing means 68 into which the scale suppressing agent 67 is charged is connected to the entering-water pipe passage 64 in parallel. Hence a portion of water sent from the lower portion of the hot water tank 57 by the circulation pump 63 flows into the bypass circuit 74 from a connection A, and remaining water flows into the entering-water pipe passage 64.

The water which flowed into the bypass circuit 74 flows into the scale suppressing means 68, the scale suppressing agent 67 dissolves in this water and thereafter, the water is mixed with water which flowed into the entering-water pipe passage 64 at a connection B. The water mixed with the water which flowed through the entering-water pipe passage 64 at the connection B and in which the scale suppressing agent 67 dissolved flows into the hot water-supply heat exchanger 52, and is heated until a temperature of the water becomes equla to a predetermined temperature. At this time, the scale suppressing agent 67 included in the water especially suppresses growth of crystals such as calcium carbonate generated in the hot water-supply heat exchanger 52 and prevents generation of scale.

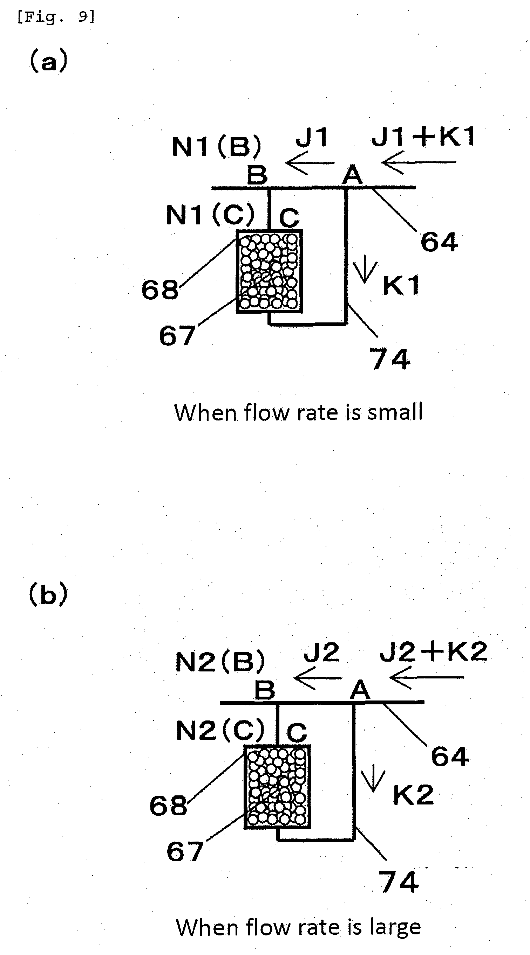

Figs. 9 are explanatory diagrams for explaining a flow rate of water flowing through the bypass circuit and the entering-water pipe passage and a concentration of the scale suppressing agent. Fig. 9(a) shows a case where a heating flow rate is small and a heating temperature is high, and Fig. 9(b) shows a case where the heating flow rate is large and the heating temperature is low.

The bypass circuit 74 is connected to the connection A and the connection B existing in the entering-water pipe passage 64 (connection A is located upstream of the connection B). The bypass circuit 74 includes the scale suppressing means 68 in which the scale suppressing agent 67 is accommodated.

A flow rate of water which splits at the connection A and flows into the entering-water pipe passage 64, and a flow rate of water which flows into the bypass circuit are defined as J1 and K1 in Fig. 9(a) and defined as J2 and K2 in Fig. 9(b). A concentration of the scale suppressing agent 67 with respect to water which flows out from an outlet C of the scale suppressing means 68 is defined as N 1 (C) in Fig. 9(a) and defined as N2(C) in Fig. 9(b).

In the case of Fig. 9(a), since the flow rate is smaller than that of Fig. 9(b), a heating flow rate becomes smaller. Thus, speed of flow in the scale suppressing means 68 becomes slower. Therefore, time during which the scale suppressing agent 67 and water which flows into the scale suppressing means 68 are in contact with each other becomes long. As a result, a concentration after the water comes out from the scale suppressing means 68 in Fig. 9(a) becomes greater. That is, this situation is expressed as the following equation 1.

$$N1(C)>N2(C) \ldots \text{(equation 1)}$$

If the concentration of the scale suppressing agent 67 downstream of the connection B is defined as N1(B) in Fig. 9(a) and defined as N2(B) in Fig. 9(b), the following equations 2 and 3 are obtained.

$$N1(B)=N1(C) \times K1/(J1+K1) \ldots \text{(equation 2)}$$

$$N2(B)=N2(C) \times K2/(J2+K2) \ldots \text{(equation 3)}$$

A relation between the entering-water pipe passage 64 and a split flow rate of a flow rate of water flowing through the bypass circuit 74 is expressed as the following equation 4.

$$J1/K1=J2/K2 \ldots \text{(equation 4)}$$

In this case, a relation between a concentration of the scale suppressing agent 67 downstream of the connection B and a concentration of the scale suppressing agent 67 after water comes out from the outlet C of the scale suppressing means 68 is expressed as the following equation 5.

$$N1(B):N2(B)=N1(C):N2(C) \ldots \text{(equation 5)}$$

From the above equations 1 and 5, a relation of concentrations of the scale suppressing agent 67 downstream of the connection B flowing into the hot water-supply heat exchanger 52 is expressed as the following equation 6.

$$N1(B)>N2(B) \ldots \text{(equation 6)}$$

As can be found from the equation 6, if a flow rate is smaller, a concentration of the scale suppressing agent 67 flowing into the hot water-supply heat exchanger 52 becomes greater. If the flow rate is smaller, the heating temperature is higher and scale is prone to generate, but the concentration of the scale suppressing agent 67 can be increased, and it is possible to suppress adhesion of scale to the hot water-supply heat exchanger 52.

Hence, as shown in Figs. 8 and 9, if water flowing from a lower portion of the hot water tank 57 through the entering-water pipe passage 64 is made to split by the bypass circuit 74 which can set the split flow rate, it is possible to appropriately adjust a flow rate of water which flows into the scale suppressing means 68. According to this, it is possible to adjust an amount of the scale suppressing agent 67 which dissolves in water.

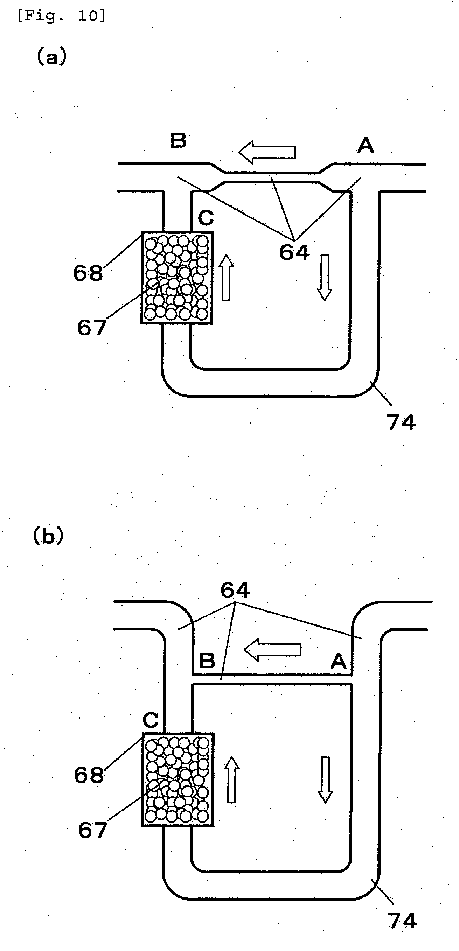

Figs. 10 are explanatory diagrams for explaining a method to set a split flow rate of a flow rate of water flowing through the bypass circuit and the entering-water pipe passage.

As shown in Fig. 10(a), a flow path resistance of the entering-water pipe passage 64 between the connection A and the connection B is changed by differentiating a cross-sectional area of the entering-water pipe passage 64 and a cross-sectional area of the bypass circuit 74 from each other. According to this, if a pressure loss between the connections A and B is set, it is possible to determine the split flow ratio of the branch flow rate in accordance with the pressure difference.

If the flow path resistance of the scale suppressing means 68 is large, dynamic pressure of fluid is applied toward the bypass circuit 74 having the scale suppressing means 68, and a shape of the entering-water pipe passage 64 between the connections A and B is changed as shown in Fig. 10(b). According to this, it is possible to set the pressure loss between the connections A and B and to determine the split flow ratio of the branch flow rate in accordance with the pressure difference if need arises.

As described above, a portion of water from the lower portion of the hot water tank 57 is made to branch, the scale suppressing agent 67 is made to dissolve in the branched portion of water, and other water flows into the hot water-supply heat exchanger 52 as it is and thus, it is possible to prevent the scale suppressing agent 67 from being wasted. There is an effect that lifetime of the scale suppressing agent is increased, and it is possible to reduce maintenance costs required for maintenance such as exchange and replenishment of the scale suppressing agent 67.

(Fourth Embodiment)

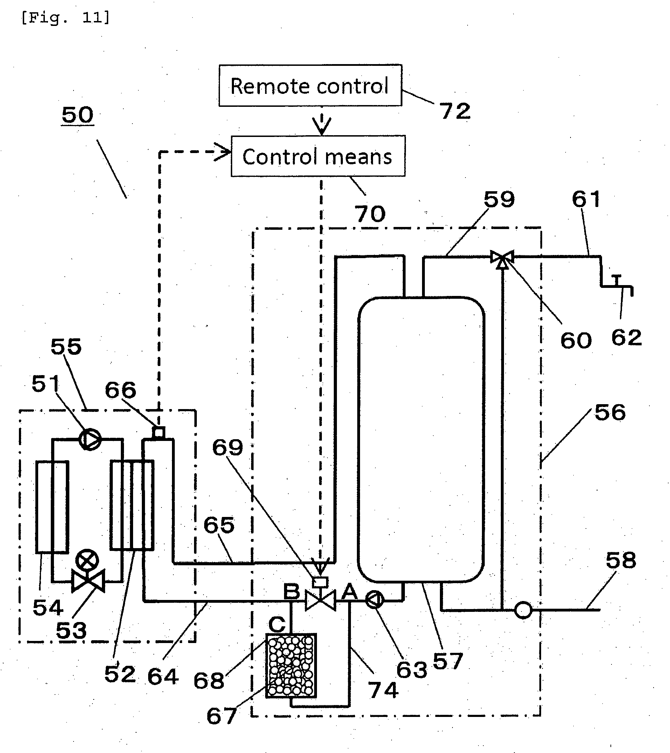

Fig. 11 is a block diagram of a water heater in a fourth embodiment of the invention.

In the fourth embodiment, the same symbols are allocated to the same elements as those in the other embodiments, and detailed description thereof will be omitted.

As shown in Fig. 11, the water heater 50 in the fourth embodiment includes flow rate-adjusting means 69 and control means 70 which controls an operation of the flow rate-adjusting means 69. The flow rate-adjusting means 69 and the control means 70 are located between the connection A and the connection B of the entering-water pipe passage 64.

As the flow rate-adjusting means 69, it is possible to use a flow rate control valve which is generally used in a water heater for example. By driving a stepping motor, a cross-sectional area of a flow path through which fluid passes is changed and a flow rate can be adjusted.

An operation and an effect of the water heater 50 configured as described above will be described below.

In Fig. 11, when a concentration of the scale suppressing agent 67 downstream of the connection B is changed to a predetermined concentration, a ratio of a flow rate (branch flow rate) of water which branches toward the scale suppressing means 68 and flows is changed by changing a flow path resistance of the flow rate-adjusting means 69 (changing cross-sectional area of flow path for example) and changing a pressure loss between the connection A and the connection B.

That is, if a flow path resistance of the flow rate-adjusting means 69 is increased (cross-sectional area of a flow path is reduced by reducing valve opening degree), the pressure loss between the connection A and the connection B is increased and thus, the ratio of the branch flow rate is increased. On the other hand, if the flow path resistance of the flow rate-adjusting means 69 is reduced (cross-sectional area of flow path is increased for example), it is possible to reduce the ratio of the branch flow rate. According to this, it is possible to adjust the flow rate.

A factor that scale adheres in the hot water-supply heat exchanger 52 and grows is a temperature (heating temperature) stored in the hot water tank 57. If the heating temperature is higher, a generation degree and a growing degree of scale are greater.

Hence, the temperature detecting means 66 detects the heating temperature, and the flow rate-adjusting means 69 sets a ratio of the branch flow rate based on the heating temperature such that a concentration of the scale suppressing agent 67 which dissolves in hot water flowing into the heating means 55 becomes equal to a concentration at which generation and growth of scale with respect to the heating temperature are suppressed. At this time, a relation between a heating temperature and a concentration of the scale suppressing agent 67 with respect to hot water capable of suppressing generation and growth of scale may previously be obtained, and this relation may be memorized in the remote control 72.

The flow rate-adjusting means 69 adjusts the ratio of the branch flow rate, but a necessary flow rate can be obtained by adjusting the number of rotations of the circulation pump 63.

By operating the flow rate-adjusting means 69 in accordance with the heating temperature, it is possible to set a concentration of the scale suppressing agent 67 capable of suppressing generation of scale. Therefore, in accordance with operating conditions of the water heater, it is possible to appropriately adjust the concentration of the scale suppressing agent 67 with respect to water which flows into the heating means 55. Hence, it is possible to provide a reliable water heater which prevents deposition and adhesion of scale for long periods. Further, there is an effect that lifetime of the scale suppressing agent 67 is increased, and it is possible to reduce maintenance costs required for maintenance such as exchange and replenishment of the scale suppressing agent 67.

A temperature (heating temperature) of hot water stored in the hot water tank 57 is generally about 65 to 90°C. If the heating temperature is higher, generation and growth of scale are larger, but if the heating temperature is about 65°C, generation of scale is small and scale does not grow almost at all.

Hence, when the heating flow rate corresponds to such a heating temperature condition, the control means 70 should adjust the flow rate-adjusting means 69 such that a concentration of the scale suppressing agent 67 becomes the smallest. That is, the control means 70 controls such that a flow path resistance of the flow rate-adjusting means 69 becomes the smallest (cross-sectional area of flow path through which fluid of flow rate-adjusting means 69 passes becomes the largest).

When the heating flow rate is such a value that generation of scale is small and scale does not grow almost at all, since the concentration of the scale suppressing agent 67 can be set to the smallest value, lifetime of the scale suppressing agent 67 becomes long. Hence, there is an effect that it is possible to reduce maintenance costs required for maintenance such as exchange and replenishment of the scale suppressing agent 67.

(Fifth Embodiment)

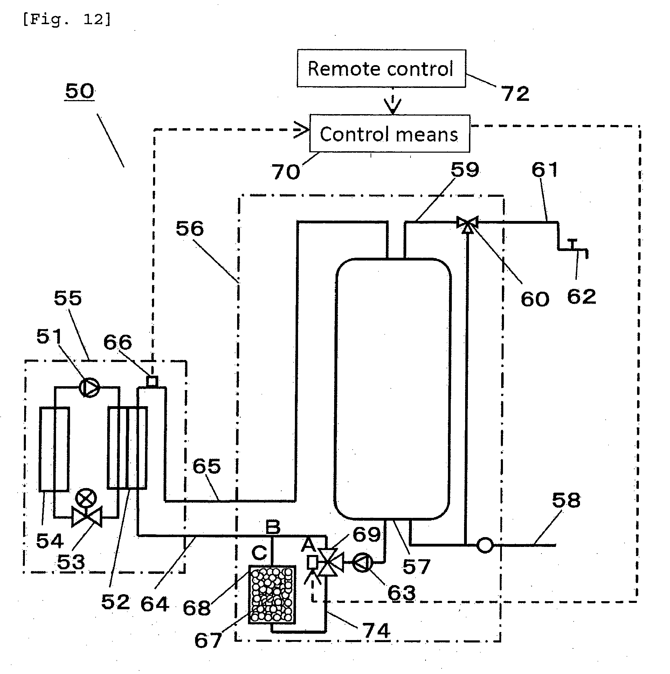

Fig. 12 is a block diagram of a water heater in a fifth embodiment of the invention. In the fifth embodiment, the same symbols are allocated to the same elements as those in the other embodiments, and detailed description thereof will be omitted.

As shown in Fig. 12, a connection A is provided with a flow rate-adjusting means 69 (three-way valve) which can adjust flow rates flowing through two outlet-side flow paths by changing cross-sectional areas of the two outlet-side flow paths. That is, a flowing-inlet of the flow rate-adjusting means 69 is connected to the entering-water pipe passage 64 of the hot water tank 57, one of two flowing-outlets of the flow rate-adjusting means 69 is connected to the entering-water pipe passage 64 of the heating means 55 and the other of the two flowing-outlets is connected to the bypass circuit 74. The control means 70 controls an operation of the flow rate-adjusting means 69 such that outlet side flow rates become equal to necessary split flow ratios.

As the flow rate-adjusting means 69, it is possible to use a mixing valve which is generally used in a water heater for example. A cross-sectional area of an outlet side flow path through which fluid passes is changed by driving a stepping motor, thereby changing a flow rate.

An operation and an effect of the water heater 50 configured as described above will be described below.

In the water heater 50 shown in Fig. 12, when a concentration of the scale suppressing agent 67 of water downstream of the connection B is changed to a predetermined configuration, a flow path resistance of the flow rate-adjusting means 69 is changed (e.g., cross-sectional area of flow path is changed). According to this, it is possible to change a ratio between a flow rate (branch flow rate) of water which branches toward the bypass circuit 74 (scale suppressing means 68) and flows and a flow rate (branch flow rate) of waer flowing through the entering-water pipe passage 64. That is, the flow rate-adjusting means 69 appropriately adjusts both a flow rate of water flowing through the entering-water pipe passage 64 and a flow rate of water flowing through the bypass circuit 74.

A factor that scale adheres in the hot water-supply heat exchanger 52 and grows is a temperature (heating temperature) stored in the hot water tank 57. If the heating temperature is higher, a generation degree and a growing degree of scale are greater.

Hence, the temperature detecting means 66 detects the heating temperature, and the flow rate-adjusting means 69 sets a ratio of the branch flow rate based on the heating temperature such that a concentration of the scale suppressing agent 67 included in water flowing into the heating means 55 becomes equal to a concentration at which generation and growth of scale with respect to the heating temperature are suppressed. At this time, a relation between a heating temperature and a concentration of the scale suppressing agent 67 with respect to hot water capable of suppressing generation and growth of scale may previously be obtained, and this relation may be memorized in the remote control 72.

The flow rate-adjusting means 69 adjusts the ratio of the branch flow rate, but a necessary flow rate can be obtained by adjusting the number of rotations of the circulation pump 63.

In accordance with the heating temperature, it is possible to set a concentration of the scale suppressing agent 67 at which scale is not generated. Therefore, it is possible to appropriately adjust a concentration of the scale suppressing agent 67 with respect to water which flows into the heating means 55 in accordance with operating conditions of the water heater. Hence, it is possible to provide a reliable water heater which prevents deposition and adhesion of scale for long periods. Further, there is an effect that lifetime of the scale suppressing agent 67 is increased, and it is possible to reduce maintenance costs required for maintenance such as exchange and replenishment of the scale suppressing agent 67.

[INDUSTRIAL APPLICABILITY]

As described above, according to the water heater of the present invention, it is possible to appropriately adjust an amount of scale suppressing agent which dissolves in water in accordance with operating conditions, to enhance reliability of the water heater, and to increase the lifetime of the scale suppressing means. Therefore, the invention can be applied to a domestic water heater and a professional-use water heater.

**Claims**

**1.** A water heater comprising:

a hot water tank (57) in which hot water is stored;

heating means (55) for heating water sent from a lower portion of the hot water tank (57) through an entering-water pipe passage (64);

a circulation pump (63) which is disposed in the entering-water pipe passage (64) and which sends water of the tower portion of the hot water tank (57) to the heating means (55);

an outgoing-hot water pipe passage (65) for guiding water heated by the heating means (55) to an upper portion of the hot water tank (57);

scale suppressing means (68) disposed in the entering-water pipe passage (64) and adding, to water sent to the heating means , scale suppressing agent (67) which suppresses generation of scale; and control means (70) for controlling the concentration of the scale suppressing agent (67) so that

when a temperature of water heated by the heating means increases a concentration of the scale suppressing agent (67) included in water which flows into the heating means (55) increased.

2. The water heater according to claim 1, wherein when the temperature of the water heated by the heating means (55) is higher, a flow rate of water which flows into the heating means (55) is made smaller.

3. The water heater according to claim 1, wherein the entering-water pipe passage (64) is provided with a bypass circuit (74) which bypasses a portion of the entering-water pipe passage (64), the scale suppressing means (68) includes flow rate-adjusting means (69) which is disposed in the bypass circurt (74) and which adjusts a ratio between a flow rate of water flowing through the entering-water pipe passage (64) and a flow rate of water flowing through the bypass circuit (74), the scale suppressing means (68) also includes temperature detecting means (66) which measures the temperature of water heated by the heating means (55), and the ratio of the flow rates is adjusted based on a detected value of the temperature detecting means (66).

4. The water heater according to any one of claims 1 to 3, wherein the scale suppressing agent (67) has polyphosphate as a main component.

**Patentansprüche**

1. Wassererhitzer, enthaltend:

einen Heißwassertank (57), in welchem Heißwasser gespeichert ist;
ein Heizmittel (55) zum Erhitzen von Wasser, das von einem unteren Abschnitt des Heißwassertanks (57) durch eine Wassereintrittsleitung (64) gefördert wird;

eine Zirkulationspumpe (63), die in der Wassereintrittsleitung (64) angeordnet ist und die Wasser von dem unteren Abschnitt des Heißwassertanks (57) zu dem Heizmittel (55) fördert;
eine Heißwasseraustrittsleitung (65) zum Fördern des Wassers, welches durch das Heizmittel (55) erhitzt wird, zu einem oberen Abschnitt des Heißwassertanks (57);
ein Mittel (68) zum Verhindern von Kalk, das in der Wassereintrittsleitung (64) angeordnet ist, und das dem zu dem Heizmittel geförderten Wasser eine Substanz (67) zum Verhindern von Kalk zuführt, welche ein Entstehen von Kalk unterdrückt; und
ein Steuermittel (70) zum Steuern der Konzentration der Substanz (67) zum Verhindern von Kalk, sodass, wenn sich eine Temperatur des von dem Heizmittel erhitzten Wassers erhöht, eine Konzentration der in dem in das Heizmittel (55) fließenden Wasser enthaltenen Substanz (67) zum Verhindern von Kalk, erhöht ist.

2. Wassererhitzer nach Anspruch 1, wobei, wenn die Temperatur des durch das Heizmittel (55) erhitzten Wassers höher ist, eine Durchflussrate des Wassers, das in das Heizmittel (55) fließt, verringert wird.

3. Wassererhitzer nach Anspruch 1, wobei die Wassereintrittsleitung (64) mit einem Bypasskreislauf (74) versehen ist, der einen Abschnitt der Wassereintrittsleitung (64) überbrückt, wobei das Mittel (68) zum Verhindern von Kalk ein Mittel (69) zum Einstellen einer Durchflussrate enthält, das in dem Bypasskreislauf (74) angeordnet ist, und das ein Verhältnis zwischen einer Durchflussrate des Wassers, das durch die Wassereintrittsleitung (64) fließt, und einer Durchflussrate des Wassers, das durch den Bypasskreislauf (74) fließt, einstellt, wobei das Mittel (68) zum Verhindern von Kalk ebenfalls ein Mittel (66) zum Erfassen von Temperatur enthält, welches die Temperatur des Wassers, das durch das Heizmittel (55) erhitzt wird, erfasst, und das Verhältnis der Durchflussraten anhand von einem erfassten Wert des Mittels (66) zum Erfassen von Temperatur eingestellt ist.

4. Wassererhitzer nach einem der Ansprüche 1 bis 3, wobei die Substanz (67) zum Verhindern von Kalk Polyphosphat als ein Hauptbestandteil aufweist.

**Revendications**

1. Chauffe-eau comprenant:

un réservoir d'eau chaude (57) dans lequel une eau chaude est stockée ;

un moyen de chauffage (55) pour chauffer l'eau envoyée à partir d'une partie inférieure du réservoir d'eau chaude (57) à travers un passage de tuyau d'eau entrante 64) ;

une pompe de circulation (63) qui est disposée dans le passage de tuyau d'eau entrante (64) et qui envoie l'eau de la partie inférieure du réservoir d'eau chaude (57) au moyen de chauffage ;

un passage de tuyau d'eau chaude sortante (65) pour guider l'eau chauffée par le moyen de chauffage (55) jusqu'à une partie supérieure du réservoir d'eau chaude (57) ;

un moyen de suppression de tartre (68) disposé dans le passage de tuyau d'eau entrante (64) et ajoutant, à l'eau envoyée au moyen de chauffage, un agent de suppression de tartre (67) qui supprime la génération de tartre ; et

un moyen de régulation (70) pour réguler la concentration de l'agent de suppression de tartre (67) de sorte que, lorsqu'une température d'eau chauffée par le moyen de chauffage augmente, une concentration de l'agent de suppression de tartre (67) inclus dans l'eau qui s'écoule dans le moyen de chauffage (55) augmente.

2. Chauffe-eau selon la revendication 1, dans lequel, lorsque la température de l'eau chauffée par le moyen de chauffage (55) est élevée, un débit d'eau qui s'écoule dans le moyen de chauffage (55) est réduit.

3. Chauffe-eau selon la revendication 1, dans lequel le passage de tuyau d'eau entrante (64) est muni d'un circuit de dérivation (74) qui contourne une partie du passage de tuyau d'eau entrante (64), le moyen de suppression de tartre (68) comporte un moyen d'ajustement de débit (69) qui est disposé dans le circuit de dérivation (74) et qui ajuste un rapport entre un débit d'eau s'écoulant à travers le passage de tuyau d'eau entrante (64) et un débit d'eau s'écoulant dans le circuit de dérivation (74), le moyen de suppression de tartre (68) comporte également un moyen de détection de température (66) qui mesure la température de l'eau chauffée par le moyen de chauffage (55), et le rapport des débits est ajusté sur la base d'une valeur détectée du moyen de détection de température (66).

4. Chauffe-eau selon l'une quelconque des revendications 1 à 3, dans lequel l'agent de suppression de tartre (67) a du polyphosphate comme composant principal.

[Fig. 1]

[Fig. 2]

[Fig. 3]

[Fig. 4]

[Fig. 5]

[Fig. 6]

[Fig. 7]

[Fig. 8]

[Fig. 9]

(a)

N1(B)　J1　J1+K1

B　←　A　←

N1(C) | C

68

67

64

K1

74

When flow rate is small

(b)

N2(B)　J2　J2+K2

B　←　A　←

N2(C) | C

68

67

64

K2

74

When flow rate is large

[Fig. 10]

(a)

(b)

[Fig. 11]

[Fig. 12]

[Fig. 13]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011069572 A